Europäisches Patentamt

European Patent Office

Office européen des brevets

(11) Veröffentlichungsnummer: **0 477 680 A2**

## (12) EUROPÄISCHE PATENTANMELDUNG

(21) Anmeldenummer: **91115441.7**

(51) Int. Cl.5: **F16C 13/00**

(22) Anmeldetag: **12.09.91**

(30) Priorität: **27.09.90 DE 4030537**

(43) Veröffentlichungstag der Anmeldung:
**01.04.92 Patentblatt 92/14**

(84) Benannte Vertragsstaaten:
**AT DE FR GB IT NL**

(71) Anmelder: **Kleinewefers GmbH**
**Kleinewefersstrasse 25**

**W-4150 Krefeld 1(DE)**

(72) Erfinder: **Pav, Josef, Dr. Dipl.-Ing.**
**Eichhornstrasse 36c**
**W-4150 Krefeld(DE)**

(74) Vertreter: **Knoblauch, Ulrich, Dr.-Ing. et al**
**Kühhornshofweg 10**
**W-6000 Frankfurt am Main 1(DE)**

(54) **Walzenaggregat mit beheizbarer und durchbiegungssteuerbarer Walze.**

(57) Ein Walzenaggregat mit beheizbarer und durchbiegungssteuerbarer Walze (2) besitzt einen Walzenmantel (5), der durch radial verlagerbare Lagerelemente (7) auf einem ihn durchsetzenden, drehfest gehaltenen Träger (6) abgestützt ist. Jedes Lagerelement (7) besitzt eine Lagerfläche (8) mit mindestens einer Lagertasche (9, 10) und eine einer Druckkammer (18) zugewandte Druckfläche (19). Die Lagertaschen werden über eine Zufuhrleitung (24) mit Heizflüssigkeit und die Druckkammern (18) über eine Zufuhrleitung (28) mit Druckflüssigkeit versorgt. Von der Druckkammer (18) geht eine Rückflußleitung (31) aus, die einen Drosselwiderstand aufweist. Auf diese Weise ergibt sich eine Strömung durch die Druckkammer (18), die eine Stagnation der Druckflüssigkeit und damit störende Ablagerungen in der Druckkammer sowie übermäßige Beheizung der Druckflüssigkeit durch die Heizflüssigkeit verhindert und den Betrieb mit höheren Temperaturen ohne betriebliche Störungen erlaubt.

Fig.1

Die Erfindung bezieht sich auf ein Walzenaggregat mit beheizbarer und durchbiegungssteuerbarer Walze, bei der ein Walzenmantel durch radial verlagerbare hydrostatische Lagerelemente auf einem ihn durchsetzenden, drehfest gehaltenen Träger abgestützt ist und jedes Lagerelement eine Lagerfläche mit mindestens einer Lagertasche und eine einer Druckkammer zugewandte Druckfläche aufweist, wobei die Lagertaschen mit einer Anordnung zur Zufuhr von unter Druck stehender Heizflüssigkeit und die Druckkammern mit einer Anordnung zur Zufuhr von Druckflüssigkeit verbunden sind.

Bei einem bekannten Walzenaggregat dieser Art (DE-OS 39 09 556) wird die Heizflüssigkeit den Lagertaschen über Drosseln mit einem konstanten Volumenstrom, einer gewählten Temperatur und einem aus Gründen der Pumpenkonstruktion begrenzten Druck zugeführt. Im wesentlichen unabhängig hiervon wird die Druckkammer mit einem für die Stützfunktion des Lagerelements erforderlichen Druck versorgt, der durch eine druckregelbare Pumpe oder ein der Pumpe nachgeschaltetes Druckregelventil bestimmt ist. Zur Aufrechterhaltung der Pumpen- und Druckregelfunktion zweigt vor der Druckkammer eine mit einem Drosselwiderstand versehene Bypassleitung zum Behälter hin ab.

Der Erfindung liegt die Aufgabe zugrunde, ein Walzenaggregat der eingangs beschriebenen Art anzugeben, das störungsfrei arbeitet und zwar auch beim Betrieb mit hohen Temperaturen.

Diese Aufgabe wird erfindungsgemäß dadurch gelöst, daß von der Druckkammer eine einen Drosselwiderstand aufweisende Rückflußleitung abgeht.

Die Erfindung beruht auf der Überlegung, daß die Druckflüssigkeit in der Druckkammer praktisch stagniert. Infolgedessen können sich von der Druckflüssigkeit mitgeführte Schmutzteilchen oder Zersetzungsprodukte in der Druckkammer oder am Kolben und Zylinder ablagern, Kolbendichtungen beschädigen und schließlich die feinfühlige Verstellung der Lagerelemente behindern. Ferner wird die Druckflüssigkeit von der die Lagertaschen durchströmenden Heizflüssigkeit in unkontrollierter Weise aufgeheizt. Dies kann sich bei der Druckregelfunktion negativ auswirken. Werden die Temperatur-Grenzwerte der betreffenden Druckflüssigkeit, z.B. einfaches Hydrauliköl, überschritten, zersetzt sich die Druckflüssigkeit, es ergeben sich Ablagerungen und hieraus resultieren Betriebsstörungen.

Wenn dagegen von der Druckkammer eine Rückflußleitung abgeht, ergibt sich eine gesteuerte Druckflüssigkeitsströmung durch die Druckkammer. Durch sie werden eine Ablegung in der Druckkammer und die daraus resultierenden Schäden vermieden und eine unkontrollierte Aufheizung der Druckflüssigkeit völlig verhindert. Durch Einstellung des Durchströmvolumens kann man mit Sicherheit verhindern, daß die Grenztemperatur der Druckflüssigkeit in der Druckkammer überschritten wird. Es tritt daher keine Zersetzung auf.

Besonders günstig ist es, daß der Druckkammer oder einer Gruppe von Druckkammern ein Druckregler vorgeschaltet ist, der den Druckkammerdruck regelt und dessen gesamtes Durchflußvolumen die mindestens eine Druckkammer durchsetzt. Wegen des Vorhandenseins der Rückflußleitung kann die bisher erforderliche Druckregelventil und Pumpe überbrückende Bypassleitung entfallen. Das bedeutet, daß der zusätzliche bauliche Aufwand gering ist und trotz des Kreislaufs der Druckflüssigkeit die Pumpenleitung annähernd unverändert bleibt.

Der Drosselwiderstand in der Rückflußleitung kann insbesondere durch eine feste Drosselstelle gebildet sein. Da der Bereich, in welchem der Druckkammerdruck geregelt wird, vergleichsweise klein ist, führt eine solche feste Drosselstelle zu einer kontrollierten Durchflußmenge. Wenn die feste Drosselstelle einstellbar ist, kann man diese Durchflußmenge den jeweiligen betrieblichen Gegebenheiten anpassen.

Eine andere Alternative besteht darin, daß der Drosselwiderstand durch einen Druckregler gebildet ist, der den Druckkammerdruck regelt. Das Nachschalten eines Druckregelventils ist wegen des Vorhandenseins der Rückflußleitung möglich.

Vorzugsweise ist der Druckkammer eine Kühlvorrichtung für die Druckflüssigkeit vorgeschaltet. Auch bei mehrmaligem Umwälzen der Druckflüssigkeit durch die Druckkammer nimmt die Flüssigkeit keine unzulässigen Temperaturen an. Des weiteren kann man die Druckflüssigkeit insgesamt durch Druckbelastung und Wärmezufuhr höher beanspruchen.

Von Vorteil ist es, daß die Rückflußleitung der Druckkammer getrennt vom Rückflußpfad für die Heizflüssigkeit aus der Walze herausgeführt ist. Auf diese Weise wird dafür gesorgt, daß die Heizflüssigkeit nicht durch Vermischung mit der Druckflüssigkeit im Innern des Walzenmantels abgekühlt wird. Die Heizflüssigkeit kann daher nach Verlassen der Lagertaschen noch länger Wärme auf den Walzenmantel übertragen.

Insbesondere können für die Druckflüssigkeit und die Heizflüssigkeit zwei getrennte Kreisläufe mit eigener Pumpe und Behälter vorgesehen sein. Dies ermöglicht eine optimale Einstellung der Temperatur und des Druckes in beiden Kreisläufen, wobei aber der Einfluß des Heizflüssigkeits-Kreislaufes auf den Druckflüssigkeits-Kreislauf gering gehalten werden kann.

Auf diese Weise ist es auch möglich, als Heizflüssigkeit ein Thermalöl und als Druckflüssigkeit ein Hydrauliköl zu verwenden, wobei letzteres wesentlich billiger ist und trotzdem nicht unter dem Einfluß der Temperatur zersetzt wird.

Bei einem bevorzugten Ausführungsbeispiel ist dafür gesorgt, daß eine volumetrische Pumpe, die mindestens eine Lagertasche über eine Heizvorrichtung mit Heizflüssigkeit versorgt, druckseitig einen Abzweig besitzt, der über einen Druckregler, die Druckkammer und die Rückflußleitung zum für beide Flüssigkeiten gemeinsamen Behälter führt. Hierbei werden Druck- und Heizflüssigkeit durch die gleiche Flüssigkeit gebildet. Trotzdem lassen sich in den Lagertaschen und in den Druckkammern unterschiedliche Druck- und Temperaturwerte einstellen. Auch hier kann man die jeweils optimalen Wertepaare wählen, ohne daß eine störende Beeinflussung der Druckflüssigkeit erfolgt.

Mit Vorteil ist sowohl die Lagerfläche als auch die Druckfläche in Umfangsrichtung wesentlich größer als in Axialrichtung. Man kann mit vergleichsweise geringen Flüssigkeitsdrücken eine hohe Streckenlast im Walzenspalt erzielen. Die geringen Drücke erlauben es, mit hohen Temperaturen zu arbeiten, weil dies die Pumpe zuläßt. Trotz der hohen Temperaturen läßt sich wegen der gesteuerten Durchströmung der Druckkammer auch eine Zersetzung von nicht-temperaturbeständiger Druckflüssigkeit verhindern.

Zweckmäßigerweise beginnt die Rückflußleitung an einer Stelle der Druckkammer, die einen Abstand von der Mündung der Zufuhrleitung hat. Auf diese Weise wird die Druckkammer insgesamt gut durchströmt. Stagnierende Bereiche lassen sich vermeiden.

Insbesondere kann die Druckkammer durch mindestens zwei miteinander verbundene Kolben-Zylinder-Räume gebildet sein und die Zufuhrleitung kann in einem dieser Räume münden und die Rückflußleitung in einem anderen dieser Räume beginnen.

Ferner ist es zweckmäßig, daß die Druckkammer Einbauten zur Lenkung der Druckflüssigkeitsströmung aufweist. Auch mit diesen Einbauten kann man tote Winkel u.dgl. vermeiden.

Insbesondere kann die Zufuhrleitung in einem Rohrstutzen enden, der in die Druckkammer mündende radiale Austrittsöffnungen aufweist.

Bei einer weiteren bevorzugten Ausführungsform ist dafür gesorgt, daß die Druckkammer durch mindestens einen Kolben-Zylinder-Raum gebildet ist, von denen der eine Teil trägerfest ist und der andere Teil zum Lagerelement gehört, und daß die Rückflußleitung durch den trägerfesten Teil geführt ist. Die Rückflußleitung hat daher eine ortsfeste Lage.

Insbesondere kann die Rückflußleitung an der freien Seitenwand des trägerfesten Teils austreten. Dort ist Platz vorhanden, so daß der Träger selbst nicht durch die Rückflußleitung belastet sein muß.

Eine Weiterbildung besteht darin, daß sich die Rückflußleitung als ein an die Austrittsstelle anschließendes Rohr fortsetzt. Hiermit kann man verhindern, daß die Heizflüssigkeit und die Druckflüssigkeit sich im Innern des Walzenmantels vermischen.

Die Erfindung wird nachstehend anhand in der Zeichnung dargestellter bevorzugter Ausführungsbeispiele näher erläutert. Es zeigen:

Fig. 1    einen Teilquerschnitt durch das erfindungsgemäße Walzenaggregat mit Schaltbild für die Zufuhr der Druckflüssigkeit und der Heizflüssigkeit,

Fig. 2    eine Draufsicht auf das Lagerelement der Fig. 1,

Fig. 3    eine andere Ausführungsform in der Darstellung der Fig. 1 und

Fig. 4    ein gegenüber Fig. 3 abgewandeltes Schaltbild.

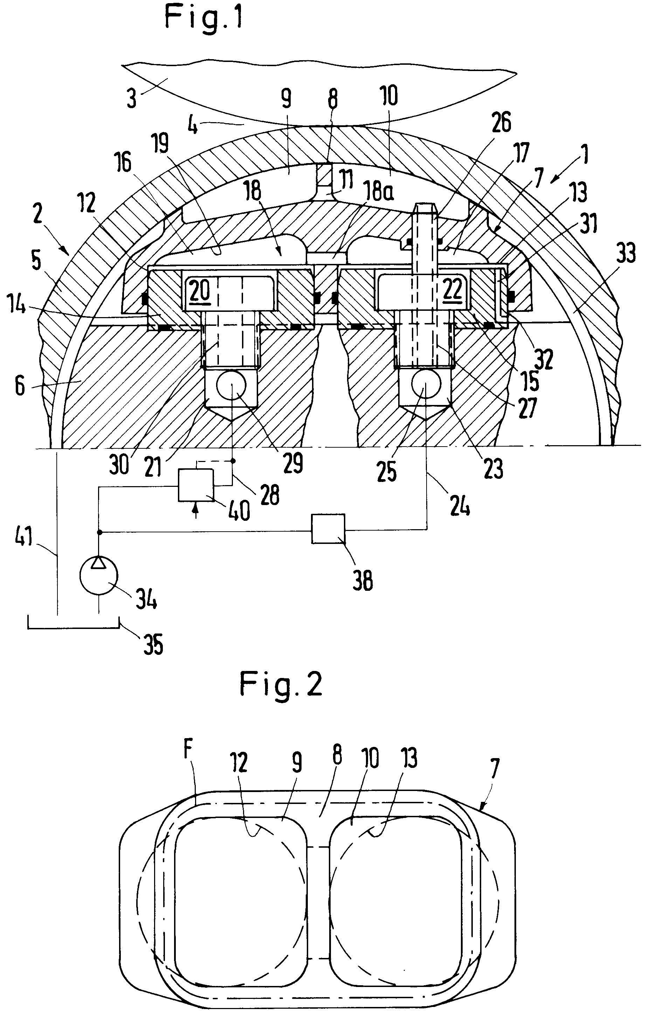

Das Walzenaggregat 1 in Fig. 1 weist eine beheizbare und durchbiegungssteuerbare Walze 2 auf, die mit einer Gegenwalze 3 unter Bildung eines Walzenspalts 4 zusammenwirken kann. Die Walze 2 besitzt einen drehbaren Walzenmantel 5, der von einem drehfest gehaltenen Träger 6 durchsetzt wird. Auf diesem Träger 6 ist der Walzenmantel 5 durch eine sich axial erstreckende Reihe von dicht nebeneinander angeordneten hydrostatischen Lagerelementen 7 abgestützt. Statt einer solchen Reihe können auch zwei oder mehr Reihen vorgesehen sein.

Wie die Fig. 1 und 2 zeigen, besitzt das Lagerelement 7 eine Lagerfläche 8, in welcher zwei Lagertaschen 9 und 10 ausgebildet sind, die über einen Kanal 11 miteinander in Verbindung stehen. Innerhalb der strichpunktierten Linie der Fig. 2 ergibt sich die druckwirksame Fläche F, die multipliziert mit dem Kammerdruck die tatsächlich vom Lagerelement ausgeübte Kraft ergibt. An der Unterseite des Lagerelements 7 befinden sich zwei Zylinder 12 und 13, die zusammen mit einem trägerfesten zylindrischen Kolben 14 bzw. 15 zwei Kolben-Zylinder-Räume 16 und 17, welche untereinander über einen Kanal 18a verbunden sind, bilden. Die Zylinderräume 16 und 17 stellen eine Druckkammer 18 dar, bei der die den Kolben 14 und 15 gegenüberliegenden Flächen eine wirksame Druckfläche 19 bilden. Der druckwirksame Teil der Lagerfläche 8, der die Lagertaschen 9 und 10, die dazwischen liegende Trennwand und etwa den halben Außenrand umfaßt, und die Druckfläche 19 sind annähernd gleich groß. Sie haben in Umfangsrichtung eine erheblich größere Erstreckung als in Axialrichtung. Die Projektion der Zylinder 12 und 13 auf die Lagerfläche 8 ragt in Umfangsrichtung über die Lagerfläche hinaus (Fig. 2). Der Kolben 14 ist mit Hilfe einer Schraube 20, die in eine Gewindebohrung 21 des Trägers 6 eingreift, am Träger befestigt. Der Kolben 15 ist mit Hilfe einer Schraube 22, die in eine Gewindebohrung 23 des Trägers 6 eingreift, ebenfalls mit dem Träger verbunden.

Eine Zufuhrleitung 24 für Heizflüssigkeit, die jeweils für ein Lagerelement oder eine Gruppe von Lagerelementen vorgesehen sein kann, führt über einen Axialkanal 25 im Träger 6, die Gewindebohrung 23 und einen Rohrstutzen 26, der in eine Axialbohrung 27 der Schraube 22 eingesetzt ist, zu den Lagertaschen 9 und 10. Die Zufuhr erfolgt daher ohne Zwischenschaltung einer Drossel. Eine Zuleitung 28 für Druckmittel, die ebenfalls für jedes Lagerelement oder für Gruppen von Lagerelementen vorgesehen sein kann, führt über eine Axialbohrung 29 im Träger 6, die Gewindebohrung 21 und eine Axialbohrung 30 in der Schraube 20 zur Druckkammer 18.

Im trägerfesten Kolben 15 ist eine Rückflußleitung 31 vorgesehen, die vom Kolben-Zylinder-Raum 17 ausgeht und an der freien Seitenwand 32 des Kolbens 15 in den Innenraum 33 des Walzenmantels mündet. Die Rückflußleitung 31 ist durch Bohrungen mit begrenztem Querschnitt gebildet, so daß diese Bohrungen eine feste Drosselstelle darstellen. Statt dessen kann eine Bohrung üblichen Querschnitts auch mit einem Einsatz, der eine feste Drossel bildet, versehen werden. Da die Druckflüssigkeit durch die Axialbohrung 30 in den Kolben-Zylinder-Raum 16 eintritt und aus dem Kolben-Zylinder-Raum 17 über die Rückflußleitung 31 austritt, ergibt sich in der Druckkammer 18 eine Druckflüssigkeitsströmung, die im wesentlichen alle Bereiche erfaßt, so daß sich keine toten Ecken mit stagnierender Druckflüssigkeit ergeben.

Bei der Betriebsweise nach Fig. 1 ist eine gemeinsame volumetrische Pumpe 34 vorgesehen. Sie fördert die Flüssigkeit über einen ersten Zweig mit einer Heizvorrichtung 38 zur Zufuhrleitung 24 für die Heizflüssigkeit. Ein Abzweig führt über ein Druckregelventil 40 zur Zuleitung 28 für die Druckflüssigkeit. Durch Einstellung des Druckreglers 40 wird in der Druckkammer 18 ein gewünschter Druck aufrechterhalten, der unter Berücksichtigung der Druckfläche 19 maßgebend für die Streckenlast im Spalt 4 ist. Die Pumpe 34 wird so geregelt, daß trotz der Abzweigung eines Teils der Flüssigkeit in den Kreislauf mit der Druckkammer 18 ein konstanter Volumenstrom zu den Lagertaschen 9, 10 gefördert wird. Daher stellt sich in den Lagertaschen 9, 10 automatisch ein Druck ein, der zur Übertragung der auf die Druckfläche wirkenden Kraft erforderlich ist. Da der zur Druckkammer 18 abzuzweigende Strom im Vergleich zum Hauptstrom gering ist, erübrigt sich, jedenfalls in vielen Fällen, eine Volumenstromregelung.

Heizflüssigkeit und Druckflüssigkeit vermischen sich im Innenraum 33 und werden gemeinsam über den Rückflußpfad 41 in den Behälter 35 zurückgeführt.

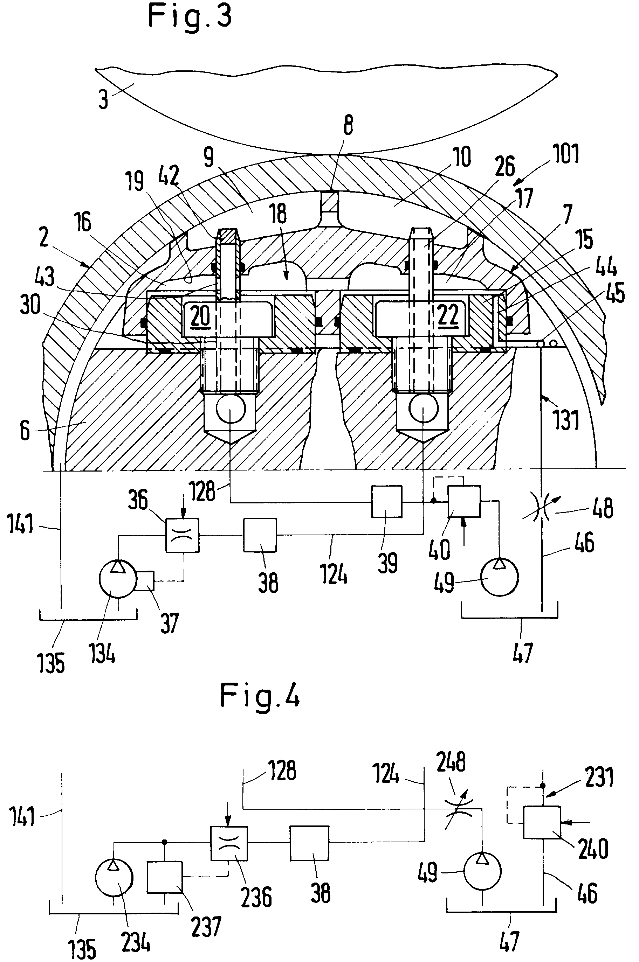

Bei der Ausführungsform nach Fig. 3 werden für gleiche Teile dieselben und für entsprechende Teile um 100 erhöhte Bezugszeichen verwendet.

In die Akialbohrung 30 der Schraube 20 ist ein stirnseitig verschlossener Rohrstutzen 42 gesteckt, der radiale Öffnungen 43 aufweist. Durch diese wird die über die Zufuhrleitung 128 zugeführte Druckflüssigkeit mit radialer Ausrichtung in den Kolben-Zylinder-Raum 16 eingeleitet. Dieser Rohrstutzen 42 bildet demnach Einbauten zur Lenkung der Druckflüssigkeitsströmung.

Die Rückflußleitung 131 besteht aus Bohrungen 44 im Kolben 15, einem Rohr 45, das sich an die Austrittsstelle der Bohrungen 44 anschließt, und einem außerhalb der Walze 2 angeordneten Leitungsabschnitt 46, der zu einem Behälter 47 führt. In die Rückflußleitung ist eine vorzugsweise einstellbare Drossel 48 eingebaut. Eine von der Pumpe 134 für die Heizflüssigkeit getrennte Pumpe 49 versorgt den über die Druckkammer 18 führenden Kreislauf. Sie ist über einen Druckregler 40 und eine Kühlvorrichtung 49 mit der Zufuhrleitung 128 für die Druckflüssigkeit verbunden. Die volumetrische Pumpe 134 ist mit einer Regelvorrichtung 37 versehen, die in Abhängigkeit von einer Volumenstrommeßeinrichtung 36 arbeitet.

Bei dieser Konstruktion kann als Heizflüssigkeit ein Thermalöl und als Druckflüssigkeit ein Hydrauliköl verwendet werden. Auch wenn die Heizflüssigkeit durch die Heizvorrichtung 38 stark erhitzt wird, ist der Einfluß dieser Temperatur auf die Druckflüssigkeit in der Druckkammer 18 vernachlässigbar. Dies gilt auch, wenn die Druckfläche 19 kleiner ist als der druckwirksame Teil der Lagerfläche 8 und daher die Druckflüssigkeit unter einem höheren Druck steht als die Heizflüssigkeit.

Bei der Ausführungsform nach Fig. 4 werden für gleiche Teile dieselben und für entsprechende Teile um 200 erhöhte Bezugszeichen verwendet. Zur Förderung der Heizflüssigkeit dient eine volumetrische Pumpe 234 mit konstantem Fördervolumen. Um der Zufuhrleitung 124 einen konstanten Volumenstrom zuzuführen, wirkt die Volumenstrommeßvorrichtung 236 auf ein Ableitventil 237. Im Kreis der Druckflüssigkeit ist die Reihenfolge der einstellbaren Drossel 248 und des Druckregelventils 240 vertauscht. Das heißt die Drosselstelle 248 ist der Pumpe 49 nachgeschaltet, während der Druckregler 240 in der Rückflußleitung 231 liegt.

In dem Ausführungsbeispiel der Fig. 1 ist eine volumetrische Pumpe mit konstantem Fördervolumen veranschaulicht, in Fig. 3 eine solche mit Regelfunktion. Es kommt aber auch eine volumetrische Pumpenanordnung in Betracht, die eine sehr einfache Steuermöglichkeit für den Volumenstrom hat, beispielsweise das Umschalten auf nur zwei verschiedene Werte. Letzteres läßt sich mit einer drehzahl-umschaltbaren Pumpe oder einer zwei Parallelpumpen aufweisenden Pumpenanordnung erzielen.

**Patentansprüche**

1. Walzenaggregat mit beheizbarer und durchbiegungssteuerbarer Walze, bei der ein Walzenmantel durch radial verlagerbare hydrostatische Lagerelemente auf einem ihn durchsetzenden, drehfest gehaltenen Träger abgestützt ist und jedes Lagerelement eine Lagerfläche mit mindestens einer Lagertasche und eine einer Druckkammer zugewandte Druckfläche aufweist, wobei die Lagertaschen mit einer Anordnung zur Zufuhr von unter Druck stehender Heizflüssigkeit und die Druckkammern mit einer Anordnung zur Zufuhr von Druckflüssigkeit verbunden sind, dadurch gekennzeichnet, daß von der Druckkammer (18) eine einen Drosselwiderstand aufweisende Rückflußleitung (31; 131; 231) abgeht.

2. Walzenaggregat nach Anspruch 1, dadurch gekennzeichnet, daß der Druckkammer (18) oder einer Gruppe von Druckkammern ein Druckregler (40) vorgeschaltet ist, der den Druckkammerdruck regelt und dessen gesamtes Durchflußvolumen die mindestens eine Druckkammer (18) durchsetzt.

3. Walzenaggregat nach Anspruch 1 oder 2, dadurch gekennzeichnet, daß der Drosselwiderstand durch eine feste Drosselstelle (48) gebildet ist.

4. Walzenaggregat nach Anspruch 1, dadurch gekennzeichnet, daß der Drosselwiderstand durch einen Druckregler (240) gebildet ist, der den Druckkammerdruck regelt.

5. Walzenaggregat nach einem der Ansprüche 1 bis 4, dadurch gekennzeichnet, daß der Druckkammer (18) eine Kühlvorrichtung (39) für die Druckflüssigkeit vorgeschaltet ist.

6. Walzenaggregat nach einem der Ansprüche 1 bis 5, dadurch gekennzeichnet, daß die Rückflußleitung (131; 231) der Druckkammer (18) getrennt vom Rückflußpfad für die Heizflüssigkeit aus der Walze (2) herausgeführt ist.

7. Walzenaggregat nach Anspruch 6, dadurch gekennzeichnet, daß für die Druckflüssigkeit und die Heizflüssigkeit zwei getrennte Kreisläufe mit eigener Pumpe (49; 134; 234) und Behälter (47; 135) vorgesehen sind.

8. Walzenaggregat nach Anspruch 7, dadurch gekennzeichnet, daß als Heizflüssigkeit ein Thermalöl und als Druckflüssigkeit ein Hydrauliköl verwendet ist.

9. Walzenaggregat nach einem der Ansprüche 1 bis 5, dadurch gekennzeichnet, daß eine volumetrische Pumpe (34), die mindestens eine Lagertasche (9, 10) über eine Heizvorrichtung (38) mit Heizflüssigkeit versorgt, druckseitig einen Abzweig besitzt, der über einen Druckregler (40), die Druckkammer (18) und die Rückflußleitung (31) zum für beide Flüssigkeiten gemeinsamen Behälter (35) führt.

10. Walzenaggregat nach einem der Ansprüche 1 bis 9, dadurch gekennzeichnet, daß sowohl die Lagerfläche (8) als auch die Druckfläche (19) in Umfangsrichtung wesentlich größer ist als in Axialrichtung.

11. Walzenaggregat nach einem der Ansprüche 1 bis 10, dadurch gekennzeichnet, daß die Rückflußleitung (31; 131) an einer Stelle der Druckkammer (18) beginnt, die einen Abstand von der Mündung der Zufuhrleitung (28; 128) hat.

12. Walzenaggregat nach Anspruch 11, dadurch gekennzeichnet, daß die Druckkammer (18) durch mindestens zwei miteinander verbundene Kolben-Zylinder-Räume (16, 17) gebildet ist und die Zufuhrleitung (28; 128) in den einen dieser Räume (16) mündet und die Rückflußleitung (31; 131) in einem anderen dieser Räume (17) beginnt.

13. Walzenaggregat nach einem der Ansprüche 1 bis 12, dadurch gekennzeichnet, daß die Druckkammer (18) Einbauten zur Lenkung der Druckflüssigkeitsströmung aufweist.

14. Walzenaggregat nach Anspruch 13, dadurch gekennzeichnet, daß die Zufuhrleitung (128) in einem Rohrstutzen (42) endet, der in die Druckkammer (18) mündende radiale Austrittsöffnungen (43) aufweist.

15. Walzenaggregat nach einem der Ansprüche 1 bis 14, dadurch gekennzeichnet, daß die Druckkammer (18) durch mindestens einen Kolben-Zylinder-Raum (16, 17) gebildet ist, von denen der eine Teil (14, 15) trägerfest ist und der andere Teil (12, 13) zum Lagerelement (7) gehört, und daß die Rückflußleitung (31; 131) durch den trägerfesten Teil geführt ist.

16. Walzenaggregat nach Anspruch 15, dadurch gekennzeichnet, daß die Rückflußleitung (31; 131) an der freien Seitenwand (32) des trägerfesten Teils (15) austritt.

17. Walzenaggregat nach Anspruch 16, dadurch gekennzeichnet, daß sich die Rückflußleitung (131) als ein an die Austrittsstelle anschließendes Rohr (45) fortsetzt.

# Fig.1

# Fig.2

# Fig.3

# Fig.4